# EUROPEAN PATENT APPLICATION

(11) **EP 4 249 543 A1**
(43) Date of publication of application: **27.09.2023**
(21) Application number: 23162448.7
(22) Date of filing: 16.03.2023
(51) Int. Cl.: C08J 5/18, B32B 27/18, B32B 27/20, E04F 13/18, E04F 15/10, C08K 3/013

(54) **FLOOR OR WALL PANEL AND METHOD OF PRODUCING A FLOOR OR WALL PANEL**

(30) Priority: 23.03.2022 NL 2031385; 17.05.2022 NL 2031888
(71) Applicant: Champion Link International Corporation, 2640 The Valley (AI)
(72) Inventor: BAERT, Thomas Luc Martine, 9830 Sint-Martens-Latem (BE); VAN POYER, Tom, Jiaxing, 314100 (CN); BOON, Sven, Jiaxing, 314100 (CN)
(74) Representative: Patentwerk B.V.

(57) **Abstract**

The invention relates to a floor or wall panel and a method for producing it. The panel comprises a core layer comprising at least one composite material, said composite material comprising at least one inorganic material, and at least one polymeric binder, wherein a weight ratio of the inorganic material to the polymeric binder is at least 3:1. The core layer further comprises at least one organofunctional coupling agent, which is bound to the inorganic material and/or to the polymeric binder.

## Description

The present invention relates to a floor or wall panel and to a method of producing a floor or wall panel.

Floor or wall panels typically contain polymers such as polyvinylchloride (PVC) and polypropylene (PP), which are widely used in the construction industry. These polymers are thermoplastic polymers that have desirable properties, such as good moisture, scratch, and stain resistance. In addition, thermoplastics are easy to process in an extrusion process and are readily available. Thermoplastic compositions comprising a thermoplastic polymer and an inorganic material, such as an inorganic mineral filler, are common in the flooring industry. Current thermoplastic compositions have a thermoplastic polymer content to inorganic mineral filler content weight ratio of about 2:1 to 3:1. Inorganic mineral filler imparts benefits to the thermoplastic composition and the resulting extruded floor or wall panel. These benefits are mainly thermostability, rigidity, toughness, modulus of elasticity and hardness. Flame or smoke retardant properties can also be imparted by the inorganic mineral filler. However, the addition of inorganic mineral filler to the thermoplastic polymer is only beneficial up to a certain level, upper limit or saturation point. Past this point, differences in interfacial compatibility and adhesion between the inorganic mineral filler and the thermoplastic polymer as well as agglomeration of the inorganic mineral filler causes deterioration in tensile strength, impact strength and compressive strength of the floor or wall panel, and a steep decline in extrusion processing performance of the thermoplastic composition.

Hence, there is a desire to further increase the thermostability, rigidity, toughness, modulus of elasticity and hardness properties of a floor or wall panel, without decreasing its tensile strength, impact strength and/or compressive strength. A further object of the invention is to at least provide an alternative to the existing floor or wall panels.

In accordance with the present invention, in a first aspect, there is provided a floor or wall panel comprising: at least one core layer comprising at least one composite material, said composite material comprising at least one inorganic material and at least one polymeric binder, wherein a weight ratio of the inorganic material to the polymeric binder is at least 2.4:1. At least one core layer according to the invention, and in particular at least one composite material, further preferably comprises at least one hyperbranched polymer.

The panel according to the present invention has several benefits over conventional panels in several ways. The at least one hyperbranched polymer enables that a polymer matrix, in particular a hyperbranched polymer matrix, can be formed within the (composite) core layer. This results in a better bonding and co-action between the inorganic material and the polymer binder. The use of at least one hyperbranched polymer could further prevent the inorganic material from agglomerating and could in this way positively contribute to a homogenous distribution of the inorganic material throughout the composite material. This increases the rigidity, toughness, modulus of elasticity and hardness properties of the floor or wall panel. The use of at least one hyperbranched polymer further enables the use of a relatively high inorganic material content. In fact, the content of inorganic material content can be increased with respect to conventionally applied composite materials as the hyperbranched polymer enhances the overall properties of composite material.

In accordance to a second aspect of the invention, there is provided a floor or wall panel comprising: at least one core layer comprising at least one composite material, said composite material comprising at least one inorganic material and at least one polymeric binder, wherein a weight ratio of the inorganic material to the polymeric binder is at least 3:1. Wherein at least one core layer according to the invention, and in particular at least one composite material, comprises at least one organofunctional coupling agent, wherein the at least one organofunctional coupling agent is bound to at least one inorganic material and/or to at least one polymeric binder.

This results in that the organofunctional coupling agent can even bind the inorganic material and the at least one polymeric binder together. The use of at least one organofunctional coupling agent also prevents the inorganic material from agglomerating and thus ensures a homogenous distribution of the inorganic material throughout the composite material. This could further increase the rigidity, toughness, modulus of elasticity and hardness properties of the floor or wall panel.

The use of at least one organofunctional coupling agent further enables the use of a relatively high inorganic material content. In fact, the content of inorganic material can be increased with respect to conventionally applied composite materials as the organofunctional group enhances the overall properties of composite material. Multiple different or identical organofunctional coupling agents can covalently bind to the surface of the inorganic material, thereby forming a layer on this surface. Other types of bonds, such as ionic bonds, hydrogen bonds, or dipole-dipole interactions can also occur between the organofunctional coupling agents and the inorganic material and/or between the organofunctional coupling agents and the polymeric binder.

As used herein, an inorganic material may be explained a material wherein the molecules of that material lack carbon-hydrogen bonds. As used herein, the term organofunctional relates to properties of a compound or agent. A compound can be classified as organofunctional if it comprises at least one organofunctional group. An organofunctional group is a functional group containing at least one carbon-hydrogen bond, wherein that group has distinctive chemical properties, regardless of other atoms in the molecule, and wherein the organofunctional group is typically able to react with other compounds. The organofunctional coupling agent could also be referred to as coupling agent comprising at least one organofunctional group. As used herein, a coupling agent can for example be a compound that has at least two groups are capable of binding or otherwise attaching to other compounds. A coupling agent typically functions as a bridge between two or more other compounds.

It is imaginable that at least one core layer is at least partially foamed. The use of a foam material as core layer may result in reduced density and improved isolation properties, and further enhanced flame retardant properties of the panel. The polymer matrix formation achieved by the hyperbranched polymer can enable that gas is entrapped and/or enclosed within the polymer matrix. The obtained polymer matrix further enables that a relatively even distribution of gas, or bubbles, within the foamed core layer can be obtained. This results in a more homogeneous product and in a higher reproducibility of the panel.

In a further preferred embodiment, at least one core layer is an extruded core layer.

It is in particular an embodiment of the panel wherein the core layer is an extruded core layer and wherein the core layer is at least partially foamed is beneficial. Such panel benefits of the combination of an extruded core layer comprising a relatively high inorganic material to polymeric binder ratio and the extruded core layer being at least partially foamed. The use of a high inorganic material (or mineral filler) content in a foamed extruded core layer provides the panel with extraordinary and useful characteristics. Said panel benefits from the dimensional stability and indentation performance of a solid, rigid panel (i.e. SPC) having a solid thermoplastic core layer, for example of around 2100 kg/m3, but benefits also from the acoustic performance and low weight of a foamed composite (i.e. WPC), which has a foamed thermoplastic core layer, for example of around 900 to 1200 kg/m3. In addition to this, the panel according to the present invention can be said to have a reduction or at least a compromise on the disadvantages that both above mentioned SPC and WPC products exhibit.

The structure of at least one hyperbranched polymer can be compared to the branching structure of trees. When it is referred to a hyperbranched polymer a hyperbranched macromolecule or a highly branched three-dimensional (3D) macromolecule can be meant. Their globular and dendritic architectures can have a positive effect on the overall structure of the material. The presence of at least one hyperbranched polymer is positive for the ease of preparation of the composite material. The hyperbranched polymer further benefits of a low melt and solution viscosity, high solubility, globular structure, abundant functional groups, and excellent thermal properties. At least one hyperbranched polymer can for example be a dendritic hyperbranched polymer. At least one hyperbranched polymer can for example also be a hyperbranched polyamide, polyester or polyethylene. Preferably, at least one core layer comprises at least 0.5 wt% of at least one hyperbranched polymer, more preferably at least 1 wt%, most preferably at least 3 wt%. In another possible embodiment, at least one core layer comprises in the range of 3 to 5 wt% hyperbranched polymer(s).

At least one hyperbranched polymer preferably comprises at least 16 hydroxyl functional groups. However, it is also conceivable that at least one hyperbranched polymer comprises at least 32 hydroxyl functional groups, or even at least 64 hydroxyl functional groups. Typically, at least one hyperbranched polymer has a molecular weight of at least 1600, in particular at least 3200, more in particular at least 6400. However, at least one hyperbranched polymer as applied in the context of the present invention may also have a molecular weight which is even higher. At least one hyperbranched polymer may have a molecular weight up to 9000. The molecular weight can be determined in grams per mole.

It is for example conceivable that at least one grafted hyperbranched polymer. At least one hyperbranched polymer typically has a 3-dimensional structural configuration. Alternatively or additionally, at least one hyperbranched polymer may comprise a 1-dimensional (linear) substrate or a 2-dimensional substrate, such as a planar surface.

In a preferred embodiment, at least one core layer further comprises at least one copolymer. This is beneficial as the combination of at least one hyperbranched polymer and at least one copolymer may further contribute to the provision of a stable polymer matrix, in particular a stable and constructive hyperbranched polymer matrix. The copolymer, and preferably copolymers, can attach to the hyperbranched polymer, and in particular to the functional groups thereof. It is for example conceivable that 1 hyperbranched polymer connects with at least one copolymer to form a hyperbranched polymer-copolymer constructions. It is conceivable that n copolymers attach to the hyperbranched polymer with n being the amount of functional hydroxyl groups present in the hyperbranched polymer.

At least one hyperbranched polymer and at least one copolymer, if applied, are preferably present in a (weight) ratio of at least 9:1. It is for example conceivable that at least one hyperbranched polymer and at least one copolymer are present in a ratio of 9:1 to 20:1. Preferably, at least one core layer comprises at least 0.5 wt% of at least one hyperbranched polymer and at least one copolymer, preferably at least 1 wt%, more preferably at least 3 wt%. In a preferred embodiment, at least one core layer comprises in the range of 3 to 5 wt% hyperbranched polymer(s) and copolymer(s). In a beneficial embodiment, at least one copolymer comprises at least one carboxyl functional group. Carboxyl groups were found to be effective in the coupling the copolymer with the hyperbranched polymer. It is conceivable that at least one copolymer is a linear polymer. At least one copolymer can for example be chosen from the group of acrylates and/or monostearin. Hence, at least one copolymer can be an acrylic or acrylic acid copolymer. It is also conceivable that at least one copolymer is a monoglyceride, such as monostearin.

Preferably, the weight ratio of the inorganic material to the polymeric binder is at 2.5:1, more preferably at least 3:1. However, it is also conceivable that the weight ratio of the inorganic material to the polymeric binder is at least 3.5:1, in particular at least 4:1, and more in particular at least 4.5:1. It is conceivable that the weight ratio of inorganic material to the polymeric binder is at most 5:1. As the weight ratio increases, the thermostability, rigidity, toughness, modulus of elasticity and hardness properties of a floor or wall panel are enhanced, while its tensile strength, impact strength and compressive strength are not negatively affected. The use of these relatively high contents of inorganic material is possible due to the use of at least one hyperbranched polymer.

The at least one organofunctional coupling agent, if applied, may comprise silicon (Si), titanium (Ti), and/or zirconium (Zr). It was experimentally found that those organofunctional coupling agents where each suitable to be used in order to improve the characteristics of a composite material comprising at least one inorganic material and at least one polymeric binder.

The organofunctional coupling agent may for example have the formula:

(R₁O)ₙ-R₂-(OR₃)ₘ

wherein: R₁ is an alkoxy group, R₂ is Ti or Zr, R₃ is an organofunctional group, n is an integer ranging between 1 and 3, and m equals 4-n, wherein R₁ can be different groups if n is 2 or 3, and wherein R₃ can be different groups if m is 2 or 3. The titanium (Ti) or zirconium (Zr) atom is typically covalently bound to 4 groups. At least one of these groups is an organofunctional group and at least one of these groups is an alkoxy group. If the organofunctional coupling agent comprises more than one organofunctional group, these organofunctional groups can be the same or different. If the organofunctional coupling agent comprises more than one alkoxy group, these alkoxy groups can be the same or different. The alkoxy group may be a surface reactive group that can react with free protons on the surface of the at least one inorganic material.

Optionally, R₁ can be selected from methoxy, ethoxy and acetoxy. Alternatively, the organofunctional coupling agent can be a monoalkoxy titanate, titanium triisostearoylisopropoxide, isoprophyl triisostearoyl titanate, distearoyl isopropoxy aluminate, neopentyl(diallyl)oxy tri(dioctyl)pyrophosphate titanate, or cyclo[dineopentyl(diallyl)]pyrophosphate dineopentyl(diallyl) zirconate.

The at least one organofunctional coupling agent can for example be an organofunctional silane coupling agent. Organofunctional silanes are capable to form covalent bonds between inorganic materials and organic materials, such as a polymeric binder. These bonds lead to a more homogenised distribution of inorganic material throughout the polymeric binder. Thereby, the inorganic material is less likely to agglomerate, preventing the floor or wall panel from becoming brittle. Hence, in a beneficial embodiment, at least one core layer comprises at least one organofunctional silane coupling agent.

In a preferred embodiment, the core layer, and in particular the composite material, comprises at least 0.1 wt% of organofunctional coupling agent. However, it is also conceivable that the core layer, and in particular the composite material, comprises at least 0.2 wt% of organofunctional coupling agent, more in particular at least 0.5 wt%. It is also conceivable that the core layer, and in particular the composite material, comprises in the range of 0.1 to 10 wt% organofunctional coupling agent, in particular in the range of 0.5 to 5 wt%. It was experimentally found that relatively low fractions of organofunctional coupling agent could already significantly improve the characteristics of the panels and the production method thereof.

Preferably, the at least one inorganic material comprises at least one inorganic salt and/or at least one mineral. It is also conceivable that at least one inorganic material is a mineral material, in particular a mineral filler.

Preferably, at least one inorganic material comprises calcium carbonate (CaCO₃), dolomite (CaMg(CO₃)₂), calcium silicate (Ca₂SiO₄), aluminium hydroxide (Al(OH)₃), magnesium hydroxide (Mg(OH)₂), or any combination thereof. The inorganic material may also comprise a magnesium-based mineral, such as magnesium oxide (MgO), magnesium chloride (MgCI) or Magnesium oxychloride, and/or magnesium oxysulfate. In a further non-limiting embodiment, it is also conceivable that at least one inorganic material comprises calcium carbonate, limestone, chalk, talc, dolomite, clay, calcium silicate, or any combination thereof. These inorganic materials further increase rigidity and dimensional stability of the panel. In case at least one inorganic material is a mineral filler, it is preferred that at least one mineral filler of the composite material comprises calcium carbonate (CaCO3), chalk, clay, calcium silicate, dolomite, talc, magnesium oxide (MgO), magnesium chloride (MgCl or MOC cement), magnesium oxysulfate (MOS cement) and/or limestone. The use of at least one mineral material in the core layer is conceived to impart a sufficient rigidity thereby ensuring dimensional stability of the panel. It is for example conceivable that the mineral material comprises a magnesium-based mineral, such as but not limited to magnesium oxide (MgO), magnesium chloride (MgCl or MOC cement), magnesium oxysulfate (otherwise known as MOS cement). At least one inorganic material may have a mesh between 100 - 1200, preferably between 200 - 1200, more preferably between 400 - 1200. In case limestone is applied as mineral filler, it is beneficial if the mesh of limestone used is at least a 300 mesh. The mesh used can for example be a 325 mesh or 400 mesh.

At least one core layer could further comprises at least one organic material. If applied, said at least one organic material is preferably present in an amount of at least 10 wt%. It is also conceivable that at least one core layer comprises at least 15 wt% of organic material. A non-limiting example of organic material which can be applied is organic biomass. Other organic biomass that can be used includes, but is not limited to, woody biomass, rice husks, rice husk powder, rice husk ash, rice straw, straw, wheat, hemp, hemp fiber, hemp stalk, carbon, mycelium, non-woody biomass, processed or recycled wastes, and processed fuels. At least one organic material could for example be a fibrous material or a cellulose material. An embodiment is also of interest wherein the core layer further comprises at least one coupling agent, in particular at least one organofunctional coupling agent. This could be any of the described embodiments of organofunctional coupling falling within the scope of this invention. The present invention also relates to a floor or wall panel comprising at least one core layer comprising at least one composite material, said composite material comprising at least one inorganic material, and at least one polymeric binder, wherein a weight ratio of the inorganic material to the polymeric binder is at least 2.4:1 and wherein the core layer further comprises at least one organic material.

At least one core layer, and in particular at least composite material may further comprise fibers. It is for example conceivable that the core layer comprises natural fibers. Non-limiting examples of fibers which could be applied are glass fibers, carbon fibers, carbon black fibers, graphite fibers, boron nitride fibers, aramid fibers, or any combination thereof. Fibers may further increase the toughness and elasticity of the panel. The fibers, if applied, can be loose fibers and/or interconnected fibers which form a woven or nonwoven layer. It is also conceivable that the core layer comprises at least one additional filler selected from the group consisting of wood, acrylic, curaua, coconut, viburnum and fique. The use of any of said components can further increase the strength of the panel itself and/or the water resistance and/or the fire resistance of the panel. Possibly, at least one core layer, and in particular the composite material, comprises at least one additive selected from the group of steel, glass, polypropylene, acrylic polymers, alumina, carbon, cellulose, kevlar^{™} (poly(azanediyl-1,4-phenyleneazanediylterephthaloyl)), nylon, perlon (polycaprolactam), polyethylene, polyvinyl acetate (PVA), and rock wool. This further increases the strength of the floor or wall panel and improves the water and/or the fire resistance thereof.

Further non-limiting examples of fibers which could be applied are natural fibers comprised in the core is rice husk fiber,rice husk fiber ash, coffee husk fiber, coffee husk fiber ash, coconut fiber, wood fiber, recycled wood fiber and the like. The natural fiber is preferably rice husk fiber or rice husk fiber ash. It is conceivable that the natural fiber replaces part of the inorganic filler in the polymeric matrix and is present in the polymeric matrix in at least 5%, more preferably at least 10%, and most preferably at least 15% by weight. The natural fiber is dried by means of a microwave step and subjected to an alkali treatment such as NaOH to make it hydrophobic, which is found to greatly improve its processability, or carbonated. It is conceivable the natural fiber is subjected to a plasma or corona treatment to improve its compatibility with the at least one polymeric binder. It is conceivable that the natural fiber is further at least partially subjected to a surface treatment comprising at least one organofunctional coupling agent. The natural fibers applied can be hydrophobic fibers.

The panel according to the present invention, and in particular the core layer, comprises at least one inorganic material. It is also conceivable that the panel comprises multiple inorganic materials. Advantageously, at least one inorganic material comprises a metal hydroxide. Metal hydroxides combined with the organofunctional coupling agent unexpectedly increased the modulus of rigidity and the stability of the panel beyond what could be expected from prior art panels comprising an inorganic material.

Hence, it is another objective of the invention to enhance flame or smoke retardant properties of a floor or wall panel. At least one inorganic material may be a flame retardant inorganic material. The flame retardant inorganic material can for example be a metal hydroxide. At least one inorganic material may comprise aluminium trihydroxide, magnesium hydroxide, molybdenum hydroxide, tin(II) hydroxide, zinc borate, huntite, hydromagnesite, zinc hydroxystannate, ferrocene, or any combination thereof. A panel comprising these materials results in the panel having enhanced flame retardant properties. It was experimentally found that the produced smoke under flaming or non-flaming exposure is reduced to 300 or less according to the ASTM E84 smoke density test method, by the addition of such inorganic materials. It was experimentally found that metal hydroxides combined with at least one hyperbranched polymer, at least one organofunctional coupling agent, or with both at least one hyperbranched polymer and at least one organofunctional coupling agent have an unexpected synergy increasing the stability and rigidity of the core beyond the parameters expected from the prior art.

At least one organofunctional coupling agent, if applied, can for example be an organometallic coupling agent. At least one organofunctional coupling agents may form atomic monolayers on the inorganic filler surface. The coupling eliminates air voids and moisture in the inorganic filler surface which then improves adhesion and strength on the coupled layers. The coupling also shifts the critical pigment volume concentration (CPVC) which determines the volumetric point at which there is sufficient polymer to provide moisture to finely ground pigment or paint particles. Moreover, the CPVC shift created by the coupling increases the inorganic filler's properties such as its thermal conductivity and flame retardance. This may then aid in the intumescent properties of the core layer when such fillers and couplings obtained due to the organofunctional coupling agent, are integrated. A titanate coupling agent for example, if applied, provides one or more atomic monolayers having phosphate- or titanium intumescent capability to both organic and inorganic compounds present in the core layer. This results to a controlled burn rate and burn rate exponent of flame retardant compositions such as flame-retardant thermoplastics or thermosets. In another embodiment, the titanate coupling agents add hydrophobicity and organophilic to inorganic compounds. The said titanate coupling agent reacts with fillers, pigments, and fibers that are non-reactive with silanes such as but is not limited to calcium carbonate (CaCO3), boron nitride, carbon black, organic pigments, dyes, graphite fibers, polyester fibers, aramid, and combinations thereof. Moreover, compared with silanes, the titanate coupling agents react more completely with fiberglass, silica and/or other silane reactive substrates. This then improves the visual appearance, profile smoothness, and resistance to delamination under pressure.

In another preferred embodiment, the organofunctional coupling agent, if applied, has catalytic properties which can be beneficial for uncured or un-crosslinked thermoplastics. The benefits include increased polymer toughness due to increased elongation per unit length (strain) which maintains or increases the polymer's tensile strength and the creation of finer and more uniformed foamed polymers since the open cell formation is reduced due to the increased polymer strain strength at elevated temperatures.

Preferably, the addition of at least one organofunctional coupling agent allows the repolymerization and copolymerization of the polymer blend. This is then beneficial to the recycling process using the said polymers. Moreover, the polymer recrystallization time is also reduced while the polymer flow is increased at lower temperatures which results to faster extrusion, blow, and injection mold cycle times. This also creates better quality parts based on strength, impact resistance, aging, appearance, weld line elimination and clearance tolerances.

In a preferred embodiment, at least one core layer comprises at most 25 wt% of polymeric binder per total weight of the composite material. The relatively low weight percentage of polymeric binder is advantageous, as polymeric binder is expensive as compared to inorganic material and can be undesired to apply from environmental point of view. The use of at least one hyperbranched coplymer and/or at least one organofunctional coupling agent enables that the preferred characteristics of the polymeric binder are not negatively affected despite its relatively low content. It is for example also possible that the core layer, and in particular the composite material, comprises at most 30 wt% of polymeric material or at most 20 wt% polymeric material. It is even conceivable that the core layer, and in particular the composite material comprises at most 15 wt% of polymeric material. Preferably, the core layer comprises 10 to 25 wt% of polymeric binder per total weight of the composite material, such as 15 to 25 wt%. More preferably, the core layer comprises 15 - 20 wt% of polymeric binder per total weight of the composite material.

In a beneficial embodiment, at least one core layer, and in particular the composite material, comprises at least 40 wt% of inorganic material, preferably at least 40 wt% of calcium carbonate and/or limestone. However, it is also conceivable that the core layer, and in particular the composite material, comprises in the range of 30 to 80 wt%, preferably 40 to 70 wt% of calcium carbonate and/or limestone. Calcium carbonate and limestone were found to be suitable materials to apply in a panel according to the present invention. The core layer may further comprise additional inorganic materials.

The at least one core layer may in a possible embodiment comprise between 10 and 20 wt.% aluminium trihydroxide, preferably between 12 and 18 % aluminium trihydroxide, more preferably between 14 and 16 wt.% aluminium trihydroxide based on total weight of the composite material. These weight percentages result in enhanced flame retardant properties of the panel.

In particular, the at least one core layer may comprise between 10 and 20 wt.% aluminium trihydroxide, preferably between 12 and 18 % aluminium trihydroxide, more preferably between 14 and 16 wt.% aluminium trihydroxide and the organofunctional coupling agent is organofunctional silane.

Preferably, the at least one polymeric binder comprises at least one polyolefin, polyvinyl chloride (PVC), polypropylene (PP), polystyrene (PS), polyethylene (PE), polyurethane (PU), acrylonitrile butadiene styrene (ABS), phenolic resins, phenol formaldehyde resin, or melamine formaldehyde resin. These polymers are well known to be suitable for forming floor or wall panels.

The core layer or panel can, for example, have a modulus of elasticity of at least 4000 MPa, in particular when tested according to EN310 or ASTM D790. It is also conceivable that the core layer or panel has a modulus of elasticity in the range of 4000 Mpa to 10.000 Mpa, for example in the range of 4000 Mpa to 7000 Mpa or in the range of 7000 Mpa to 10.000 Mpa. The panel, or the core layer, may further have a modulus of rigidity in the range of 25 to 40 N. The panel according to the present invention further benefits of a thermostability according to ISO 23999 of - 0.01%. In a beneficial embodiment, the density of the core layer is at least 1200 kg/m3, and preferably at least 1400 kg/m3. It is also conceivable that the density of the core layer is in the range of 1600 to 2100 kg/m3.

It is conceivable that the core layer of the substrate comprises at least one modifier or additive to further improve the material properties of the core layer. For example, the core layer's Vicat temperature increases by adding a coupling agent. However, in some cases, a further increase in the Vicat temperature or Vicat softening temperature is required. This can then be achieved through the addition of the said modifier or additive, wherein the modifier or additive is preferably a Vicat modifier. The Vicat softening temperature of the core layer is preferably at least 90 degrees Celsius, more preferably at least 85 degrees Celsius. It is also conceivable that the Vicat softening temperature of the core layer is in the range of 90 to 120 degrees Celsius, in particular in the range of 100 to 110 degrees Celsius. At least one modifier or additive could for example comprise acrylonitrile styrene acrylate (ASA), acrylonitrile butadiene styrene (ABS), a thermoset system and/or an epoxy system. It is conceivable that the additive can also be referred to as Vicat modifier. The use of at least one Vicat modifier may, in particular, be of interest when the core layer of the substrate comprises a thermoplastic mineral composite, having a mineral to thermoplastic ratio of at least 3:1. This is to ensure the Shore D hardness is maintained and/or controlled at elevated temperatures. The upper surface of the substrate preferably has a Shore D hardness of at least 90, preferably at least 95.

Panel according to the present invention, wherein at least one core layer is an extruded core layer. The use of at least one hyperbranched polymer, and/or at least one organofunctional coupling agent if applied, enables that the composite material having a relatively high inorganic material content can be used in an extrusion process. In fact, the hyperbranched polymer and/or organofunctional coupling agent reduces the temperature of the melt resulting in that the processability of the composite material is enhanced. Extrusion of the composite material according to the present invention can be done at relatively low temperatures, in particular below 200 degrees Celsius, and even under 185 degrees Celsius. This is beneficial from energetic point of view and for safety reasons. A further benefit of an extruded core layer comprising a composite according to the present invention, is that said core layer allows direct lamination of the top layer onto the core layer. This is beneficial as this enables the use of a relatively simple lamination step for attaching at least one top layer to the core layer. At least one decorative top layer, if applied, is preferably directly attached to an upper core surface of the at least one core layer. More in particular, at least one decorative top layer is preferably directly attached to an upper core surface of the at least one core layer without the interference of an adhesive layer. Hence, the lamination step may be done without the need of an adhesive layer. This is beneficial as a more reliable attachment can be created. Omitting the use of an adhesive further positively contributes to the reduction of VOC's. The panel according to the present invention preferably comprises at least one decorative top layer which is laminated to the at least one core layer. It is, for example, conceivable that at least one core layer and at least one decorative top layer are at least partially fused together. However, in an alternative embodiment, it is conceivable that an adhesive layer is present between the core layer and at least one top layer.

An embodiment of a panel is conceivable which comprises multiple core layers. In case multiple core layers are applied, preferably at least one core layer, and more preferably each core layer comprises at least one hyperbranched polymer and/or at least one organofunctional coupling agent. It is further beneficial if at least one core layer and in particular each core layer is an extruded core layer. The panel could, for example, comprise at least two core layers. The core layers may be directly attached to another, for example without the interference of an adhesive layer. It is conceivable that that the core layers vary in thickness. It is also conceivable that the core layers have a different material composition. It is, for example, imaginable that an upper core layer has a lower density than a bottom core layer, or vice versa.

Each core layer can be a core layer according to any of the embodiments described for the present invention. In a preferred embodiment, at least one core layer is a co-extruded core layer. This can be for example 2 or 3-layer co-extrusion.

At least one core layer preferably has a thickness of at least 3 mm. It is, for example, conceivable that at least one core layer has a thickness between 3 mm and 12 mm or between 3 and 9 mm, preferably between 4 mm and 5.5 mm or between 5.5 mm and 7 mm. Beneficial embodiments comprise a core layer having a thickness in the range of 2.5 to 4 mm or in the range of 3.5 to 5 mm. In case multiple core layers are applied, it is also conceivable that said core layers vary in thickness. It is, for example, conceivable that the combination of core layers has a thickness between 3 and 12 mm. It is conceivable that multiple core layers are applied, wherein at least one core layer has a thickness in the range of 0.5 to 1 mm and at least one further core layer has a thickness in the range of 1 to 3 mm. It is possible that a core layer comprises at least three core layers, wherein a central core layer is enclosed between an upper core layer and a lower core layer. It is preferred that the upper core layer and/or the lower core layer have a larger thickness than the central core layer, or vice versa.

In a preferred embodiment of the panel, at least two opposite side edges of the core layer are provided with a chamfer or bevel.

It is for example conceivable that the panel comprises at least two chamfers or bevels, wherein a first chamfer is provided at a first side edge of the panel and a second chamfer is provided at a second side edge which opposes said first side edge, wherein each chamfer extends through at least part of the decorative top layer and/or through at least part of the core layer. The angle at which the chamfer(s) provides the best visual effect ranges from 2 degrees to 30 degrees, more preferably from 4 to 15 degrees and even more preferably 6 to 9 degrees. The depth of the chamfer can for example range from 0.1 mm to 0.55 mm, in particular from 0.2 mm to 0.35 mm, and more in particular from 0.5 mm to 3 mm, and even more in particular from 1.5 mm to 2.5 mm. Said preferred ranges are found to the beneficial for the visual effect, especially but not necessarily, in combination with abovementioned viscosity and/or load ranges.

In a further possible embodiment of the present disclosure, the surface area of the top layer, if applied, is smaller than the surface of the core layer. When assembling a floor from these panels, the impression of a grout is given, formed by the uncovered and thus visible parts of the core layer. The spacing created is preferably consistent. The spacing can be easily maintained due to the prefabricated nature of the panels. It is possible to then grout this spacing with mortar or an epoxy grout if required, or to use the substrate as an imitation grout. In this case, the substrate is preferably level with the top layer on at least two sides, with the imitation grout on at least one side. It is possible to manufacture a grout with a certain colour for aesthetic effect, or to add a colour in the manufacturing process, or to add a finish with a certain colour to the surface of the grout. It is also conceivable that the top layer forms integral part of the core layer. Hence, the top layer may be formed by a structure provided in the core layer.

In a possible embodiment of the panel, the depth of at least one chamfer, if applied, is smaller than the thickness of the decorative top layer. When it is referred to the depth of a chamfer, a direction perpendicular to a plane defined by the upper surface of the top surface is meant. Hence, at least one chamfer can extend though at least part of the decorative top layer, if applied. If the top layer comprises a plurality of layers, it is for example conceivable that a chamfer extends through at least the upper layer of the plurality of layers. At least one chamfer preferably has a depth of at least 0.2 mm. Further, at least one chamfer preferably has a width of at least 0.55 mm. In yet another preferred embodiment, at least one chamfer fully extends through the decorative top layer. The chamfer can thus extend through all layers of the decorative top layer in case the decorative top layer comprises a plurality of layers. In such embodiment, it is conceivable that the chamfer extends through both the decorative top layer and the core layer. This means that the depth of the chamfer can be larger than the thickness of the decorative top layer. This embodiment may provide an appealing visual effect due to different panel layers being visible in case a substantially transparent or translucent coating layer is applied. In a preferred embodiment, at least one chamfer has a substantially linear shape. At least one chamfer having a linear shape in practice involves the chamfer having an inclined surface. In such embodiment, the chamfers of two adjacent panels, in particular (inter)connected panels, typically define a V-shape. In another possible embodiment, at least one chamfer has a substantially convex shape. It is also conceivable that all chamfers of the panel have a substantially convex shape. Preferably, the chamfers of two adjacent panels, in particular (inter)connected panels, having a substantially convex shape define a substantially U-shaped cutout portion. In yet another embodiment, it is conceivable that at least one chamfer has a substantially square shape. Preferably, the chamfers of two adjacent panels, in particular (inter)connected panels, having a substantially square shape define a grout, for example an imitation grout. In this embodiment, the upper surface and the side edge of the chamfer forms a substantially 90-degree angle. In some cases, one or more chamfers are formed on the decorative top layer's upper surface at a predetermined distance from the peripheral edges. The one or more chamfers can be parallel to the said peripheral edges or inclined at predetermined angles with respect to an at least one peripheral edge of the panel. The one or more chamfers may also intersect each other in at least one point. The intersection between one or more chamfers may preferably form right angles or angles below 90 degrees. The said one or more chamfers can either be digitally printed or mechanically formed on the panel's decorative top layer. In another embodiment, the surface of the chamfer may also be applied with one or more layers of polymer coatings, a protective layer, sealant, antibacterial or antiviral protection, combinations thereof, or other functional layers.

In a preferred embodiment, at least one core layer comprises at least one pair of opposite side edges which is provided with complementary coupling parts. In a further preferred embodiment, the panel, and in particular the core layer comprises at least one pair of opposite side edges which are provided with interconnecting coupling parts for interconnecting adjacent panels. The panel according to the present invention may comprise at least one pair of opposing (side) edges, said pair of opposing (side) edges comprising complementary coupling parts configured for mutual coupling of adjacent panels. The coupling parts of the panel may, for example, be interlocking coupling parts, which are preferably configured for providing both horizontal and vertical locking. Interlocking coupling parts are coupling parts that require elastic deformation, a click or a movement in multiple directions to couple or decouple the parts with or from each other. Any suitable interlocking coupling parts as known in the art could be applied. A non-limiting example is an embodiment wherein a first edge of said first pair of opposing edges comprises a first coupling part, and wherein a second edge of said first pair of opposing edges comprises a complementary second coupling part, said coupling parts allowing a plurality of panels to be mutually coupled; wherein the first coupling part comprises a sideward tongue extending in a direction substantially parallel to a plane defined by the panel, and wherein the second coupling part comprises a groove configured for accommodating at least a part of the sideward tongue of another panel, said groove being defined by an upper lip and a lower lip.

The panel may comprise at least one decorative top layer. This further enhances the visual appeal of the panel. At least one top layer, if applied, is preferably affixed to said core layer. The top layer may, for example, be a decorative layer. It is also conceivable that the top layer comprises a decorative layer and a wear layer covering said decorative layer. The decorative layer may be composed of a film provided and/or printed with a motif. The decorative layer may be a paper layer and/or a polymer layer, such as a PVC layer. The wear layer is commonly substantially transparent. The wear layer may consist of one or more transparent lacquer layers. Typically, the thickness of the layer(s) in the panel is in the range of 0.2 to 2.0 mm. The panel according to the present invention is typically a laminated panel. A decorative top layer, if applied, may for example comprise at least one ply of cellulose-based layer and a cured resin, wherein the cellulose-based layer is preferably paper or kraft paper. Said ply of cellulose-based material may also be a veneer layer adhered to a top surface of the core layer. The veneer layer is preferably selected from the group consisting of wood veneer, cork veneer, bamboo veneer, and the like. Other decorative top layers that could possibly be applied for the present invention include a ceramic tile, a porcelain tile, a real stone veneer, a rubber veneer, a decorative plastic or vinyl, linoleum, and decorative thermoplastic film or foil. The top layer may possibly be further provided with a wear layer and optionally a coating. Examples of thermoplastics which could be used in such top layer are PP, PET, PVC and the like. It is also possible to provide on the top facing surface of the core an optional primer and print the desired visual effect in a direct printing process. The decorative top layer can receive a further finishing with a thermosetting varnish or lacquer such as polyurethane, PUR, or a melaminebased resin.

The panel according to the present invention may, for example, comprise at least one decorative top layer, wherein said decorative top layer is a ceramic tile. In a preferred embodiment, the peripheral edges of at least one ceramic tile are positioned at a predetermined distance from the peripheral edges of at least one core layer such that a grout is formed when a plurality of panels are interconnected. Such grout could be filled with a grouting material, in order to fill and/or seal the seams between adjacent panels. The grouting material could be any type of grouting material suitable for use in combination with ceramic tiles. Preferably, the said predetermined distance is equal over the entire length and/or width of the panel. Due to the peripheral edges of the ceramic tile being positioned at a predetermined distance from the peripheral edges of the core layer, there is no need for the user to align the ceramic tiles in order to obtain a usable grout. Hence, when using the panels of this embodiment, grouts between adjacent ceramic tiles are basically automatically formed when a plurality of panels are interconnected. When the grouts are filled with a grouting material, a relatively strong interconnection between adjacent ceramic tiles can be obtained. The predetermined distance can, for example, be at least 0.5 mm, preferably at least 1 mm. Hence, the peripheral edges of the ceramic tile can be positioned in at least 0.5 mm distance from the peripheral edges of the core layer. Hence, in case all peripheral edges of the ceramic tile are positioned in at least 0.5 mm distance from the peripheral edges of the core layer, when interconnecting a plurality of such panels, a grout of at least 1 mm will be formed around each ceramic tile. It is, for example, conceivable that the peripheral edges of the ceramic tile are positioned between 0.5 mm and 3 mm distance from the peripheral edges of the core layer. For example, the peripheral edges of the ceramic tile are positioned in at least 1 mm distance from the peripheral edges of the core layer.

In some embodiments, the panel's decorative top layer, if applied, may comprise at least one grout line on the decorative top layer's upper surface. The grout line can be formed on at least one peripheral edge or on the decorative top layer's middle part. In some cases, multiple grout lines are formed on the decorative top layer's upper surface at a predetermined distance from the peripheral edges. The grout lines can be parallel to the said peripheral edges or inclined at predetermined angles with respect to an at least one peripheral edge of the panel. Multiple grout lines can also be formed on the decorative top layer's upper surface, wherein the multiple grout lines may intersect in at least one point. The intersection between multiple grout lines may preferably form right angles or angles below 90 degrees.

The said grout lines can either be digitally printed or mechanically formed on the panel's decorative top layer.

It is also conceivable that the panel comprises at least one backing layer affixed to the core layer. It is also conceivable that the panel comprises (at its back surface) at least one balancing layer, generally composed of at least one layer comprising lignocellulose and a cured resin. The panel may also comprise at least one acoustic layer, usually composed of a low-density foamed layer of ethylene-vinyl acetate (EVA), irradiation-crosslinked polyethylene (IXPE), expanded polypropylene (XPP), expanded polystyrene (XPS), but also nonwoven fibers such as made from natural fibers like hemp or cork, or recycled/recyclable material such as PET or rubber. The density of this acoustic layer preferably has a density between 65 kg/m3 and 300 kg/m3, most preferably between 80 kg/m3 and 150 kgm3.

In another aspect, the invention relates to a method of producing a floor or wall panel, in particular a floor or wall panel as described above, comprising the steps of:
a) providing at least one inorganic material, at least one polymeric binder and preferably at least one hyperbranched polymer, wherein a weight ratio of the inorganic material to the polymeric binder is at least 2.4:1, to obtain a mixture;
b) feeding the mixture of the at least one inorganic material, the at least one polymeric binder and the at least one hyperbranched polymer to an extruder; and
c) extruding the mixture such that an extruded core layer is formed.

The method according to the present invention results in the provision of a panel as described above according to the first aspect. Any of the described preferred embodiments, materials, additives and/or compositions can be applied for the method according to the present invention. A conventional extruder may be used to apply the method. The method can also be applied to obtain a co-extruded core layer.

In yet another aspect, the invention relates to a method of producing a floor or wall panel, in particular a floor or wall panel as described above, comprising the steps of:
a) providing at least one inorganic material, at least one polymeric binder and at least one organofunctional coupling agent, wherein a weight ratio of the inorganic material to the polymeric binder is at least 3:1, to obtain a mixture;
b) feeding the mixture of the at least one inorganic material, the at least one polymeric binder and the at least one organofunctional coupling agent to an extruder; and
c) extruding the mixture such that an extruded core layer is formed wherein said at least one organofunctional coupling agent is bound to the at least one inorganic material and/or to the at least one polymeric binder.

The method according to the present invention results in the provision of a panel as described above according to the second aspect. Any of the described preferred embodiments, materials, additives and/or compositions can be applied for the method according to the present invention. A conventional extruder may be used to apply the method. The method can also be applied to obtain a co-extruded core layer.

In a preferred embodiment, the method includes a foaming step wherein the core layer is at least partially foamed. It is for example conceivable that a foaming agent is applied in order to enable the foaming process. At least one foaming agent may be fed to the extruder such that a core layer having at least partially a foam structure is formed.

At least one foaming agent may for example comprise azodicarbonamide (C2H4N4O2) and/or sodium bicarbonate (NaHCO3). Azodicarbonamide decomposes to form mostly N2 (more specifically, nitrogen (N2) 65%, carbon monoxide (CO) 24%, carbon dioxide (CO2) 5% and ammonia (NH3) 5%) which might cause harm to the environment and is moreover not easily dispersed in the polymer melt. The decomposition of this exothermic foaming agent typically leads to an uncontrolled increase of heat which could degrade the polymer during extrusion. Sodium bicarbonate (NaHC03) forms CO2 which is easily dispersed in the composite material according to the present invention but has a problem in that it decomposes at temperatures as low as 110 degrees Celsius. It was experimentally found that the addition of citric acid and/or boric acid increase the decomposition temperature of sodium bicarbonate (NaHCO3) to levels suitable for polymer, and in particular PVC, processing, higher than 150 degrees Celsius, preferably higher than 160 degrees Celsius. A fraction of citric acid and/or boric acid is preferably applied in an amount of at least 0.5 %, more preferably at least 1%, most preferably around 5% per weight of sodium bicarbonate.

Alternatively, it is also conceivable that at least one foaming agent comprises CO2, in particular supercritical CO2. Hence, CO2, and in particular supercritical CO2 can be applied as foaming agent in a method according to the present invention. It was experimentally found that the use of supercritical CO2 resulted in a relatively small bubbles and in a more evenly dispersed core layer, in particular when compared to conventional foaming agents. The use of supercritical CO2 has several benefits over the use of conventional foaming agents. Using supercritical CO2 as a foaming agent results in the advantage of high dissolution in polymers, the process being a green process, and no need for addition of exothermic foaming agents which also release unwanted and possibly harmful compounds during their decomposition. According to a possible embodiment of the method according to the invention, the mixture of at least one inorganic material, at least one polymeric binder and at least one hyperbranched polymer to an extruder is typically introduced into the extruder, where said mixture is saturated with CO2 above supercritical conditions. The mixture can be brought to a supersaturated state by reduction of pressure and/or increase of temperature. This results in a more controlled foaming process. The combination of supercritical CO2 as foaming agent and a core layer comprising at least one hyperbranched polymer was found to be of particular interest as the (hyperbranched) polymer matrix achieved by the application of at least one hyperbranched polymer enabled that the gas formed during the foaming step could be entrapped in the polymer matrix.

The invention for example also relates to a method of producing a floor or wall panel, in particular a panel according to the present invention, comprising the steps of:
- providing at least one composite material, said composite material comprising:
   o at least one inorganic material, and
   o at least one polymeric binder,
wherein the ratio of inorganic material to polymeric binder is preferably at least 2.4:1 ;
- providing at least one foaming agent;
- providing at least one hyperbranched polymer;
- feeding a mixture of at least said composite material, said foaming agent and said hyperbranched polymer to an extruder;
- subjecting the mixture to a heating and shearing step at a temperature which is at least equal to or above the decomposition temperature of at least one foaming agent such that a melt, in particular a melt having a foam structure, is formed; and
- enabling the melt to at least partially expand prior to leaving the die of the extruder such that an extruded core layer is formed which is at least partially foamed.

In a preferred embodiment, the method of producing a floor or wall panel, in particular a floor or wall panel as described above, further comprising the step of providing at least one organic material to the composite material. If applied, said at least one organic material is preferably present in an amount of at least 10 wt%. It is also conceivable that at least one core layer comprises at least 15 wt% of organic material. A non-limiting example of organic material which can be applied is organic biomass. Other organic biomass that can be used includes, but is not limited to, woody biomass, non-woody biomass, processed or recycled wastes, and processed fuels. At least one organic material could for example be a fibrous material or a cellulose material. Prior to the addition of the organic material to the composite material, the organic material preferably undergoes a cleansing process, a mechanical process, a drying process, a microwaving process, and/or a plasma treatment. The cleansing process can be any process used for cleaning the organic material to remove any dirt or impurities. The mechanical process reduces the size of the organic material which can be through shredding, crushing, slicing, pulverizing, fragmentizing, or any size reduction or size altering process. The organic material can then undergo plasma treatment for further processing.

Preferably, the organic material is added in combination with at least one coupling agent. At least one coupling agent can for example be an organofunctional coupling agent or an organofunctional silane. The addition of such coupling agent assures that the organic material bonds more easily with the polymeric binder or any polymer compound in the composite material such as polyvinyl chloride (PVC), polypropylene (PP), polyethylene (PE), combinations thereof, or any other similar polymeric compound. The coupling agent or the organofunctional coupling agent, if applies, binds to the organic material or biomass and to the said polymeric binder or any polymer compound. The coupling agent then acts as an intermediary material that improves the bonding between two different materials. It is conceivable that the coupling agent or the organofunctional coupling agent could be any of the described embodiments of organofunctional coupling agent falling within the scope of this invention. The invention also relates to a method of producing a floor or wall panel, in particular a floor or wall panel, in particular according to any of the preceding claims, comprising the steps of providing at least one inorganic material, at least one polymeric binder and at least one organic material, wherein a weight ratio of the inorganic material to the polymeric binder is at least 2.4:1, feeding a mixture of at least one inorganic material, at least one polymeric binder and at least one organic material to an extruder; and extruding the mixture such that a core layer is formed, in particular an extruded core layer. As described above, optionally, at least one coupling agent could be added prior to the extrusion step.

The weight ratio of the inorganic material to the polymeric binder may be at least 2.5:1, at least 3:1, at least 3.5:1, at least 4:1, at least 4.5:1, or even at least or up to 5:1. Not only does a weight ratio of the inorganic material to the polymeric binder of at least 2.4:1 in combination with at least one hyperbranched polymer enhance the rigidity, toughness, modulus of elasticity and hardness properties of the floor or wall panel, but it also enhances the extrusion process. The hyperbranched polymer and/or organofunctional coupling agent, if applied, distributes the inorganic material throughout the mixture, therefore the inorganic material is less likely to agglomerate, facilitating subsequent extrusion of the mixture.

The method may also comprise the addition of at least one organofunctional coupling agent. Hence, the method may further comprise the step of subjecting the at least one inorganic material and the at least one organofunctional coupling agent to a modification prior to step b) such that at least a fraction of the at least one organofunctional coupling agent is bound to the at least one inorganic material and/or to the at least one polymeric binder prior to the extrusion. The use of such modifying step may contribute to further optimization the extrusion process. Surface modification of at least the inorganic material may take place in the modification step. Optionally, at least a fraction of at least one inorganic material and at least a fraction of at least one organofunctional coupling agent are covalently bound to each other prior to the extrusion step.

The at least one inorganic material may have a mesh between 100 - 1200, preferably between 200 - 1200, more preferably between 400 - 1200. As used herein, mesh is used to describe the size of a particle. For example, a particle having a mesh of 100 is defined as a particle that can pass through a screen having 100 openings per square inch of the screen. As the mesh of a particle increases, its size decreases. Inorganic material having a high mesh, and thus a small size, are advantageous, as this results in a better homogenized mixture, and therefore enhances extrudability of the mixture and rigidity and toughness of the panel.

The method according to the present invention further benefits of the fact that relatively low extrusion temperatures can be applied. The hyperbranched polymer and/or organofunctional coupling agent, if applied, reduces the temperature of the extrusion melt resulting in that the processability of the composite material is enhanced. Extrusion of the composite material according to the present invention can be done at relatively low temperatures, in particular below 200 degrees Celsius, and even under 185 degrees Celsius. This is beneficial from energetic point of view and for safety reasons. Conventional extrusion process using composite material comprising inorganic material and polymeric binder typically use processing temperatures which are 30 to 40 degrees Celsius higher. Another benefit of the use of at least one hyperbranched polymer and/or at least one organofunctional coupling agent is that the processing speed during extrusion can be relatively high.

Preferably, the method comprises a step of laminating at least one decorative top layer onto an upper core surface of the core layer. Additionally, or alternatively, the method may comprise a step of profiling at least one side edge of the core layer, in particular such that complementary coupling parts are provided.

As indicated above, at least one foaming agent could be applied in order to enable facilitate the formation of a foamed core layer. In a preferred embodiment, at least one foaming agent comprises azodicarbonamide (C2H4N4O2) and/or sodium bicarbonate (NaHCO3). It was experimentally found that said chemical compounds are suitable to use as foaming agent for a composite material as applied in the present invention. The foaming agents, preferably azodicarbonamide and sodium bicarbonate, if applied, are preferably present in a ratio in the range of 1.5:1 to 3:1. Most preferably, the azodicarbonamide and sodium bicarbonate are present in a ratio of 2:1. The foaming agent can be added to the composite material at a total weight % of the composition of at most 1%, more preferably at most 0.8 wt%. In particular for sodium bicarbonate it is required that said compound is applied in an appropriate quantity as too much of it would cause the cells of the formed foam to collapse resulting in a denser foam structure. It was experimentally found that the foam density decreases almost linearly with an increase of sodium bicarbonate. In a preferred embodiment, the foaming agent is added in the range of 0.3 to 0.5 wt%. It was experimentally found 0.4 wt% of azodicarbonamide and sodium bicarbonate in a ratio of 2:1 causes 20% weight reduction for a composite material having a limestone to PVC ratio of 3:1. Alternatively, or additionally, it is for example also possible that at least one foaming agent comprises N,N'-dinitroso-N,N'-dimethyl terephthalamide, N-aminophthalimide 4,4'-oxybis (benzenesulphonylhydrazide), N,N'-dinitrosopentamethylenetetramine, Azoisobutyric dinitrile, Diazoaminobenzene, Dinitropentamethylene tetramine, Benzenesulfohydrazide, Terephthalyl bis (N-nitrosomethylamide), Toluene-2,4-bis (sulfonyl hydrazide) p-tertiary butylbenzazide), p-carbomethoxy benzazide, Diarylpentaazadiene and/or 3 methyl, 1 ,5-diphenylpentaazadiene. At least one foaming agent can be an exothermic foaming agent and/or at least one foaming agent can be an endothermic foaming agent. The foaming agent can also be referred to as blowing agent.

It is beneficial if at least one foaming catalyst is applied. The foaming catalyst, if applied, can for example be configured to decrease the decomposition temperature of the foaming agent. Hence, the foaming catalyst can also be configured to reduce the decomposition of at least one foaming agent to a desired temperature. The decomposition temperature can be lowered by the addition of at least one kicker or foaming catalyst. Non-limiting examples of foaming catalyst which can be applied for the present invention are CaO, Carbamide, Zinc 2-ethylhexanoate, Zinc benzenesulfinate, Zinc carbonate, Zinc ditolyl sulfinate, Zinc oxide, Zinc stearate, Ca/Zn esters, Ba/Zn esters, K/Zn esters, Dibutyltin bis(iso-octylmaleate) and/or Dialkyltin bis(alkylthioglycollates). If applied, the kicker is preferably present in a ratio of 0,5%, more preferably at least 1%, most preferably around 5% of the mixture.

The core layer, and/or the composite material, could further comprises at least one additive. Any of the additives described for the panel according to the present invention can be applied. The method may also comprises the step of profiling and/or edging at least one side edge of at least one panel, in particular the core layer. During this step, at least one side edge of the panel may be provided with complementary coupling parts. Optionally, the panel and/or the core layer can be subjected to at least one embossing step. Said embossing step, if applied, is in particular configured to apply a tactile texture to an upper surface of the panel.

It is conceivable that the upper core surface of the core layer is annealed, sanded and/or corona treated. Such treatment may further increase for example the surface energy of the core layer, which can be of positive influence for the bonding process. The method may further comprise the of annealing at a temperature of at least 90 degrees Celsius and a substantially constant pressure of at least 1 Mpa for at least 1 minute. Alternatively or additionally, the core layer could be annealed, for example at a temperature of at least 90 degrees Celsius for PVC or at least 140 degrees Celsius for PP.

The invention will be further elucidated based upon the following non-limitative clauses:
1. A floor or wall panel comprising:
   at least one core layer comprising at least one composite material, said composite material comprising:
   ∘ at least one inorganic material, and
   ∘ at least one polymeric binder,
   wherein a weight ratio of the inorganic material to the polymeric binder is at least 2.4:1,
   and wherein the core layer further comprises at least one hyperbranched polymer.
2. Panel according to clause 1, wherein at least one core layer is at least partially foamed.
3. Panel according to clause 1 or clause 2, wherein at least one core layer comprises at least one foaming agent.
4. Panel according to any of the preceding clauses, wherein at least one hyperbranched polymer comprises at least 16 hydroxyl functional groups, preferably at least 32 hydroxyl functional groups, more preferably at least 64 hydroxyl functional groups.
5. Panel according to any of the preceding clauses, wherein at least one hyperbranched polymer has a molecular weight of at least a 1600, in particular at least 3200, more in particular at least 6400.
6. Panel according to any of the preceding clauses, wherein the core layer further comprises at least one copolymer.
7. Panel according to clause 5 or 6, wherein at least one hyperbranched polymer and at least one copolymer are present in a ratio of at least 9:1.
8. Panel according to clause 5 or 6, wherein at least one hyperbranched polymer and at least one copolymer are present in a ratio of 9:1 to 20:1.
9. Panel according to any of clauses 5 to 8, wherein the core layer comprises at least 0.5 wt% of at least one hyperbranched polymer and at least one copolymer, preferably at least 1 wt%, more preferably at least 3 wt%
10. Panel according to any of clauses 5 to 9, wherein at least one copolymer comprises at least one carboxyl functional group.
11. Panel according to any of clauses 5 to 10, wherein at least one copolymer is a linear polymer.
12. Panel according to any of clauses 5 to 11, wherein at least one copolymer is chosen from the group of acrylates and/or monostearin.
13. Panel according to any of the preceding clauses, wherein the weight ratio of the inorganic material to the polymeric binder is at least 2.5:1, preferably at least 3:1, more preferably at least 3.5:1, most preferably at least 4:1.
14. Panel according to any of the preceding clauses, wherein at least one inorganic material comprises calcium carbonate, limestone, chalk, talc, dolomite, aluminium trihydroxide, magnesium hydroxide, molybdenum hydroxide, tin(II) hydroxide, zinc borate, huntite, hydromagnesite, zinc hydroxystannate, ferrocene, or any combination thereof.
15. Panel according to any of the preceding clauses, wherein at least one core layer comprises at most 25 wt% of polymeric binder and/or wherein at least one core layer comprises at least 40 wt% of inorganic material.
16. Panel according to any of the preceding clauses, wherein at least one core layer further comprises at least one organic material, preferably in an amount of at least 10 wt%.
17. Panel according to any of the preceding clauses, wherein at least one core layer comprises natural fibers, in particular chosen from the group of rice husk fiber, rice husk fiber ash, coffee husk fiber, coffee husk fiber ash, coconut fiber, wood fiber and/or recycled wood fiber.
18. Panel according to clause 17, wherein said core layer comprises at least 5%, more preferably at least 10%, and most preferably at least 15% by weight of natural fibers.
19. Panel according to any of the preceding clauses, wherein at least one core layer comprises between 10 and 20 wt.% aluminium trihydroxide, preferably between 12 and 18 % aluminium trihydroxide, more preferably between 14 and 16 wt.% aluminium trihydroxide.
20. Panel according to any of the preceding clauses, wherein at least one polymeric binder comprises at least one polyolefin, polyvinyl chloride, polypropylene, polystyrene, polyethylene, polyurethane, acrylonitrile butadiene styrene, phenolic resins, phenol formaldehyde resin, or melamine formaldehyde resin.
21. Panel according to any of the preceding clauses, wherein the core layer further comprises at least one organofunctional coupling agent.
22. Panel according to clause 21, wherein said at least one organofunctional coupling agent is bound to at least one inorganic material and/or to at least one polymeric binder.
23. Panel according to clause 21 or 22, wherein at least one organofunctional coupling agent comprises silicon, titanium, or zirconium.
24. Panel according to any of the preceding clauses, wherein at least one core layer is an extruded core layer.
25. Panel according to any of the preceding clauses, wherein the panel comprises at least one decorative top layer.
26. Panel according to any of the preceding clauses, wherein at least one core layer comprises at least one pair of opposite side edges which is provided with complementary coupling parts.
27. Method of producing a floor or wall panel, in particular a floor or wall panel, in particular according to any of the preceding clauses, comprising the steps of:
   a) providing at least one inorganic material, at least one polymeric binder and at least one hyperbranched polymer, wherein a weight ratio of the inorganic material to the polymeric binder is at least 2.4:1;
   b) feeding a mixture of at least one inorganic material, at least one polymeric binder and at least one hyperbranched polymer to an extruder; and
   c) extruding the mixture such that a core layer is formed, in particular an extruded core layer.
28. Method according to clause 27, wherein at least one foaming agent is fed to the extruder such that a core layer having at least partially a foam structure is formed.
29. Method according to clause 27 or clause 28, wherein at least one foaming agent comprises azodicarbonamide and sodium bicarbonate, and wherein said foaming agent is applied in combination with at least a fraction of citric acid and/or boric acid.
30. Method according to any of clauses 27 to 29, wherein at least one foaming agent comprises supercritical CO2.
31. Method according to any of clauses 27 to 30, wherein at least one core layer comprises natural fibers, in particular chosen from the group of rice husk fiber, rice husk fiber ash, coffee husk fiber, coffee husk fiber ash, coconut fiber, wood fiber and/or recycled wood fiber.
32. Method according to clause 31, wherein said core layer comprises at least 5%, more preferably at least 10%, and most preferably at least 15% by weight of natural fibers.
33. Method according to any of clauses 27 to 32, further comprising the step of providing at least one organic material to the mixture prior to the extruding step.

It will be clear that the invention is not limited to the exemplary embodiments which are described here, but that countless variants are possible within the framework of the attached claims, which will be obvious to the person skilled in the art. In this case, it is conceivable for different inventive concepts and/or technical measures of the above-described variant embodiments to be completely or partly combined without departing from the inventive idea described in the attached claims.

The verb 'comprise' and its conjugations as used in this patent document are understood to mean not only 'comprise', but to also include the expressions 'contain', 'substantially contain', 'formed by' and conjugations thereof.

## Claims

1. A floor or wall panel comprising:
at least one core layer comprising at least one composite material, said composite material comprising:
∘ at least one inorganic material, and
∘ at least one polymeric binder,
wherein a weight ratio of the inorganic material to the polymeric binder is at least 3:1,
and wherein the core layer further comprises:
∘ at least one organofunctional coupling agent,
wherein said at least one organofunctional coupling agent is bound to at least one inorganic material and/or to at least one polymeric binder.

2. Panel according to claim 1, wherein the weight ratio of the inorganic material to the polymeric binder is at least 3.5:1, preferably at least 4:1, more preferably at least 4.5:1, most preferably at least 5:1.

3. Panel according to claim 1 or claim 2, wherein at least one organofunctional coupling agent comprises silicon, titanium, or zirconium.

4. Panel according to any of the preceding claims, wherein at least one organofunctional coupling agent has the formula: (R₁O)ₙ-R₂-(OR₃)ₘ
wherein:
R₁ is an alkoxy group,
R₂ is titanium (Ti) or zirconium (Zr),
R₃ is an organofunctional group,
n is an integer ranging between 1 and 3, and
m equals 4-n,
wherein R₁ can be different groups if n is 2 or 3,
wherein R₃ can be different groups if m is 2 or 3.

5. Panel according to claim 4, wherein R₁ is selected from methoxy, ethoxy and acetoxy.

6. Panel according to claim 4, wherein the organofunctional coupling agent is a monoalkoxy titanate, titanium triisostearoylisopropoxide, isoprophyl triisostearoyl titanate, distearoyl isopropoxy aluminate, neopentyl(diallyl)oxy tri(dioctyl)pyrophosphate titanate, cyclo[dineopentyl(diallyl)]pyrophosphate dineopentyl(diallyl) zirconate, or combinations and derivatives thereof.

7. Panel according to any of claims 1 to 3, wherein at least one organofunctional coupling agent is an organofunctional silane coupling agent.

8. Panel according to any of the preceding claims, wherein at least one inorganic material comprises aluminium trihydroxide, magnesium hydroxide, molybdenum hydroxide, tin(II) hydroxide, zinc borate, huntite, hydromagnesite, zinc hydroxystannate, ferrocene, or any combination thereof.

9. Panel according to any of the preceding claims, wherein at least one core layer comprises at least 0.1 wt% of organofunctional coupling agent and at least 5 wt% of inorganic material, and wherein the organofunctional coupling agent is an organosiloxane.

10. Panel according to any of the preceding claims, wherein at least one core layer comprises at most 25 wt% of polymeric binder.

11. Panel according to any of the preceding claims, wherein at least one core layer comprises between 10 and 20 wt.% aluminium trihydroxide, preferably between 12 and 18 % aluminium trihydroxide, more preferably between 14 and 16 wt.% aluminium trihydroxide.

12. Method of producing a floor or wall panel, in particular a floor or wall panel, in particular according to any of the preceding claims, comprising the steps of:
a) providing at least one inorganic material, at least one polymeric binder and at least one organofunctional coupling agent, wherein a weight ratio of the inorganic material to the polymeric binder is at least 3:1;
b) feeding a mixture of at least one inorganic material, at least one polymeric binder and at least one organofunctional coupling agent to an extruder; and
c) extruding the mixture such that an extruded core layer is formed wherein said at least one organofunctional coupling agent is bound to at least one inorganic material and/or to at least one polymeric binder.

13. Method according to claim 12, comprising the step of subjecting at least one inorganic material and at least one organofunctional coupling agent to a modification prior to step b) such that at least a fraction of at least one organofunctional coupling agent is bound to at least one inorganic material and/or to at least one polymeric binder prior to the extrusion.

14. Method according to claim 12 or claim 13, wherein at least a fraction of at least one inorganic material and at least a fraction of at least one organofunctional coupling agent are covalently bound to each other prior to step b).

15. Method according to any one of claims 12 to 14, wherein at least one inorganic material has a mesh between 100 - 1200, preferably between 200 - 1200, more preferably between 400 - 1200.
